# EUROPÄISCHE PATENTSCHRIFT

(11) **EP 4 430 385 B1**
(45) Veröffentlichungstag und Bekanntmachung des Hinweises auf die Patenterteilung: **19.08.2026**
(21) Anmeldenummer: 22814040.6
(22) Anmeldetag: 08.11.2022
(51) Int. Cl.: G01N 21/89

(54) **VORRICHTUNG, SYSTEM UND VERFAHREN FÜR EINE INSPEKTION EINER MATERIALBAHN**
DEVICE, SYSTEM AND METHOD FOR INSPECTING A MATERIAL WEB
DISPOSITIF, SYSTÈME ET PROCÉDÉ D'INSPECTION D'UNE BANDE DE MATÉRIAU

(30) Priorität: 10.11.2021 DE 102021212653
(43) Veröffentlichungstag der Anmeldung: 18.09.2024
(73) Patentinhaber: OPTIMA life science GmbH, 74523 Schwäbisch Hall (DE)
(72) Erfinder: DYLLA, Norbert, 74541 Vellberg (DE); JANSEN, Johannes, 74545 Michelfeld (DE)
(74) Vertreter: Patentanwälte Ruff, Wilhelm, Beier, Dauster & Partner mbB
(86) Internationale Anmeldenummer: PCT/EP2022/081146
(87) Internationale Veröffentlichungsnummer: WO 2023/083816

(56) Entgegenhaltungen:
- EP-B1- 2 803 485
- DE-A1- 102011 108 018
- DE-T2- 69 511 300
- US-A1- 2019 347 782

## Beschreibung

### ANWENDUNGSGEBIET UND STAND DER TECHNIK

Die Erfindung betrifft eine Vorrichtung, ein System und ein Verfahren für eine Inspektion einer entlang ihrer Längsrichtung bewegten Materialbahn.

Eine Verarbeitung von Materialbahnen ist aus verschiedenen technischen Bereichen bekannt, beispielsweise zur Herstellung von Druckerzeugnissen, zur Herstellung von Taschen und Tüten aus Papier oder Folien, zur Herstellung von Verbandsmaterial oder dergleichen. Zudem ist eine Verarbeitung von Materialbahnen zur Herstellung von Batterie- oder Brennstoffzellen oder anderen Membran-Elektroden-Anordnungen (MEA) bekannt.

Dabei ist es bekannt, eine entlang ihrer Längsrichtung bewegte Materialbahn während einer Herstellung und/oder bei einer Verarbeitung für eine Qualitätskontrolle zu inspizieren.

US 2019/347782 A1 zeigt ein System zum Überwachen eines Prozessschrittes während der Verarbeitung einer Materialbahn. Das System umfasst eine Erfassungskamera, die so konfiguriert ist, dass sie ein erstes Bild der Materialbahn aufnimmt, wobei das erste Bild ein Lokalisierungsmerkmal der Materialbahn enthält, eine Vakuum-Niederhaltevorrichtung zum selektiven Verhindern eines Vorschubs der Materialbahn entlang einer Transportrichtung für eine vorbestimmte Messzeit, und eine Messkamera, die so konfiguriert ist, dass sie ein zweites Bild der Materialbahn aufnimmt, wenn die Vakuum-Niederhaltevorrichtung den Vorschub der Materialbahn verhindert, wobei das zweite Bild ein oder mehrere Merkmale eines Markers der Materialbahn enthält. Die Messkamera ist oberhalb der Materialbahn angeordnet.

### AUFGABE UND LÖSUNG

Es ist eine Aufgabe der Erfindung, eine verbesserte Vorrichtung, ein System und ein Verfahren für eine Inspektion einer entlang ihrer Längsrichtung bewegten Materialbahn mittels einer Kamera zu schaffen.

Diese Aufgabe wird gelöst durch die Gegenstände mit den Merkmalen der Ansprüche 1, 6 und 7. Vorteilhafte Ausgestaltungen ergeben sich aus den Unteransprüchen.

Gemäß einem ersten Aspekt wird eine Vorrichtung für eine Inspektion einer entlang ihrer Längsrichtung in einer Transportebene bewegten Materialbahn mittels einer Kamera geschaffen, umfassend ein Gehäuse mit einer parallel zur Transportebene angeordneten Gleitfläche, wobei die Materialbahn entlang der Gleitfläche führbar ist, wobei das Gehäuse eine Aussparung aufweist, in welcher die Kamera aufnehmbar ist, und wobei die Vorrichtung weiter einen Unterdruckerzeuger umfasst, mittels welchem zumindest an einem Teil der Gleitfläche temporär oder dauerhaft ein Unterdruck zum Ansaugen der Materialbahn erzeugbar ist.

Die Begriffe "ein", "einer" etc. werden im Zusammenhang mit der Anmeldung als unbestimmte Artikel und nicht als Zählwörter verwendet. Ebenso dienen die Begriffe "erster" und "zweiter" in Zusammenhang mit der Anmeldung lediglich zur Unterscheidung und geben keine Reihenfolge an. Auch verlangen die Begriffe "erste", "erster" etc. nicht zwangsweise ein Vorhandensein von zweiten baugleichen oder ähnlichen Elementen.

Insbesondere sind an dem Gehäuse in einer Ausgestaltung mehrere Aussparungen vorgesehen, wobei je nach Anwendungsfall weitere Aussparungen einer Aufnahme weiterer Kameras oder einer Aufnahme von Beleuchtungsquellen dienen.

Der Begriff "Gehäuse" wird im Zusammenhang mit der Anmeldung für ein beliebig gestaltetes Bauelement bezeichnet, welches die Gleitfläche aufweist. Die Kamera ist in einer Ausgestaltung in dem Gehäuse gelagert.

Als "Unterdruckerzeuger" wird im Zusammenhang mit der Anmeldung eine Einrichtung bezeichnet, mittels welcher ein Unterdruck an der Gleitfläche aktiv erzeugbar ist. Der Unterdruckerzeuger umfasst zu diesem Zweck in Ausgestaltungen eine Pumpe, einen Ejektor oder eine Bernoulli-Düse.

Als Transportebene wird im Zusammenhang mit der Anmeldung die Ebene bezeichnet, in welcher eine Mittelebene der Materialbahn bewegt wird.

Durch ein Ansaugen der Materialbahn an die Gleitfläche ist die Materialbahn in einer definierten Position relativ zu einer in der Aussparung vorgesehenen Kamera. Dadurch ist es möglich, mittels einer hochauflösenden Kamera Bilder der Materialbahn mit hoher Schärfe aufzunehmen. Die Materialbahn wird dabei kontinuierlich oder intermittierend entlang der Gleitfläche bewegt.

Um ein Ansaugen der Materialbahn zu bewirken, ist die Gleitfläche in einer Ausgestaltung aus einem porösen Material.

In einer anderen Ausgestaltung weist die Gleitfläche eine Vielzahl an Öffnungen auf, welche mit dem Unterdruckerzeuger fluidisch verbunden sind. Dadurch ist ein gezieltes Ansaugen an definierten Bereichen der Gleitfläche möglich. Eine Form und Größe der Öffnungen ist je nach Anwendungsfall durch den Fachmann geeignet wählbar.

In einer Ausgestaltung ist stromaufwärts und stromabwärts der Gleitfläche jeweils eine Fördereinrichtung, insbesondere ein Vakuumtransportband, für einen Transport der Materialbahn entlang der Gleitfläche vorgesehen. Eine auf die Materialbahn aufgebrachte Ansaugkraft ist dabei durch den Fachmann je nach Anwendungsfall geeignet wählbar, um ein Abbremsen der Materialbahn an der Gleitfläche, welches ein Stauchen oder Dehnen der Materialbahn bewirken könnte, zu vermeiden.

Alternativ oder zusätzlich ist in einer Ausgestaltung seitlich der Gleitfläche jeweils eine Fördereinrichtung für einen Transport der Materialbahn entlang der Gleitfläche vorgesehen.

In einer Ausgestaltung ist das Gehäuse und damit die Gleitfläche oberhalb der Transportebene angeordnet, wobei eine Oberseite der Materialbahn an der Gleitfläche anliegt.

In anderen Ausgestaltungen ist das Gehäuse und damit die Gleitfläche unter der Transportebene angeordnet. Dabei liegt eine Unterseite der Materialbahn an der Gleitfläche an.

Gemäß einem zweiten Aspekt wird ein System umfassend eine Kamera und eine Vorrichtung mit einer eine Aussparung aufweisenden Gleitfläche geschaffen, wobei die Kamera in der Aussparung angeordnet ist.

Eine für diesen Zweck geeignete Kamera ist je nach Anwendungsfall, beispielsweise unter Berücksichtigung einer Breite der Materialbahn, einer Fördergeschwindigkeit, einer Transparenz oder dergleichen durch den Fachmann geeignet wählbar. In einer Ausgestaltung umfasst das System zudem mehrere Beleuchtungsquellen, wobei die Materialbahn nacheinander aus verschiedenen Beleuchtungsrichtungen beleuchtet wird, zu jeder Beleuchtungsrichtung ein Bild aufgenommen wird, und in einer Bildauswertung anhand von Schattierungen eine Beschaffenheit der Materialbahn analysiert wird. Ein derartiges Verfahren wird üblicherweise als Formwahrnehmung aus Schattierung (engl. Shape-from-Shading) bezeichnet.

Die Beleuchtungsquellen sind je nach Beschaffenheit der Materialbahn und/oder einer zu inspizierenden Eigenschaft und/oder Rahmenbedingungen einer Produktions- oder Verarbeitungsanlage relativ zu der Kamera durch den Fachmann geeignet anordenbar. Die Beleuchtungsquellen und die Kamera sind in einer Ausgestaltung an gegenüberliegenden Seiten der Materialbahn angeordnet, wobei die Materialbahn mittels der Beleuchtungsquellen durchleuchtet wird.

Gemäß einem dritten Aspekt wird ein Verfahren für eine Inspektion einer entlang ihrer Längsrichtung in einer Transportebene bewegten Materialbahn geschaffen, wobei die Materialbahn entlang einer parallel zur Transportebene angeordneten Gleitfläche eines Gehäuses geführt wird, Bilder der Materialbahn mittels einer Kamera, welche in einer festen Position relativ zu der Gleitfläche in einer Aussparung des Gehäuses angeordnet ist, aufgenommen werden, und die Materialbahn zumindest an einen Teil der Gleitfläche mittels Unterdruck temporär oder dauerhaft angesaugt wird.

Durch das Ansaugen der Materialbahn an die Gleitfläche kann die Materialbahn exakt zu der Kamera positioniert werden. Die mittels der Kamera aufgenommenen Bilder sind mittels einer geeigneten Auswerteeinrichtung automatisiert auswertbar oder an einem Bildschirm für eine menschliche Kontrolle visualisierbar.

In einer Ausgestaltung des Verfahrens ist vorgesehen, dass die Materialbahn mittels einer stromaufwärts der Gleitfläche und einer stromabwärts der Gleitfläche vorgesehenen Fördereinrichtung entlang der Gleitfläche transportiert wird.

Alternativ oder zusätzlich ist in einer Ausgestaltung des Verfahrens vorgesehen, dass die Materialbahn mittels zwei seitlich der Gleitfläche vorgesehenen Fördereinrichtungen entlang der Gleitfläche transportiert wird.

In einer Ausgestaltung ist dabei vorgesehen, dass die Materialbahn über die Gleitfläche geführt wird und Bilder einer Unterseite der Materialbahn aufgenommen werden.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen schematisch:
- Fig. 1: ein erstes Ausführungsbeispiel eines Systems umfassend eine Kamera und eine Vorrichtung für eine Inspektion einer entlang ihrer Längsrichtung in einer Transportebene bewegten Materialbahn;
- Fig. 2: ein zweitens Ausführungsbeispiel eines Systems ähnlich Fig.1;
- Fig. 3: ein drittes Ausführungsbeispiel eines Systems ähnlich Fig.1; und
- Fig. 4: ein viertes Ausführungsbeispiel einer Vorrichtung für eine Inspektion einer entlang ihrer Längsrichtung in einer Transportebene bewegten Materialbahn.

### DETAILLIERTE BESCHREIBUNG DER AUSFÜHRUNGSBEISPIELE

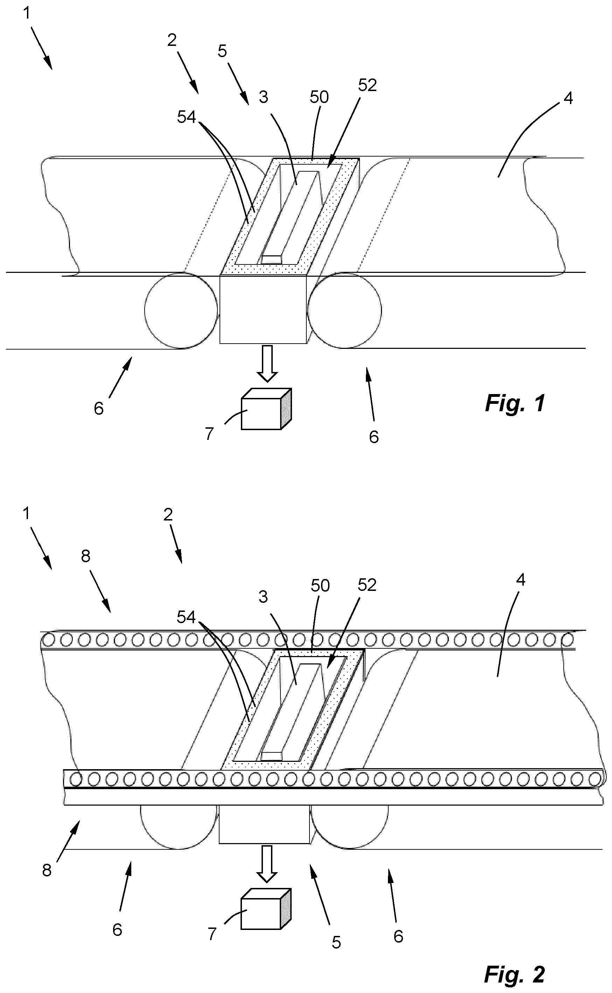

Fig. 1 zeigt ein System 1 umfassend eine Kamera 3 und ein erstes Ausführungsbeispiel einer Vorrichtung 2 für eine Inspektion einer entlang ihrer Längsrichtung in einer Transportebene bewegten Materialbahn 4 mittels der Kamera 3.

Die in Fig. 1 dargestellte Vorrichtung 2 umfasst ein Gehäuse 5 mit einer parallel zur Transportebene, unterhalb der Transportebene angeordneten Gleitfläche 50, zwei stromaufwärts und stromabwärts der Gleitfläche 50 angeordnete Fördereinrichtungen 6 für einen Transport der Materialbahn 4 entlang der Gleitfläche 50 und einen Unterdruckerzeuger 7.

An dem Gehäuse 5 ist eine Aussparung 52 vorgesehen, in welcher die Kamera 3 aufgenommen ist.

Die dargestellten Gleitfläche 50 weist eine Vielzahl an Öffnungen 54 auf, welche mit dem Unterdruckerzeuger 7 fluidisch verbunden sind, sodass an der Gleitfläche 50 temporär oder dauerhaft ein Unterdruck zum Ansaugen der Materialbahn 4 erzeugbar ist. Die dargestellte Größe, Form und Verteilung der Öffnungen 54 ist lediglich beispielhaft. Durch ein Ansaugen der Materialbahn 4 an die Gleitfläche 50 ist die Materialbahn 4 exakt zu der Kamera 3 positionierbar, sodass mittels der Kamera 3 Bilder der Materialbahn 4 mit einer hohen Genauigkeit aufnehmbar sind. Die Materialbahn 4 wird dabei kontinuierlich oder intermittierend bewegt.

Bei den dargestellten Fördereinrichtungen 6 handelt es sich beispielsweise um Vakuumtransportbänder.

Die Materialbahn 4 ist je nach Anwendungsfall einlagig oder mehrlagig.

In dem dargestellten Ausführungsbeispiel werden die Bilder von einer Unterseite der Materialbahn 4 aufgenommen. Die Materialbahn 4 ist in einer Ausgestaltung transparent, sodass nicht dargestellte Beleuchtungseinrichtungen und die Kamera 3 an gegenüberliegenden Seiten der Materialbahn 4 angeordnet werden können.

Fig. 2 zeigt ein zweitens Ausführungsbeispiel eines Systems 1 ähnlich Fig.1 umfassend eine Kamera 3 und eine Vorrichtung 2. Die Vorrichtung 2 gemäß Fig- 2 ist ähnlich der Vorrichtung 2 gemäß Fig. 1 und für gleiche oder ähnliche Bauteile werden übereinstimmende Bezugszeichen verwendet. Für eine Beschreibung der Bauteile wird auf oben verwiesen.

Im Unterschied zu der in Fig. 1 dargestellten Vorrichtung 2 umfasst die Vorrichtung 2 gemäß Fig. 2 zusätzlich zwei seitlich der Gleitfläche 50 angeordnete Fördereinrichtungen 8 für einen Transport der Materialbahn 4 entlang der Gleitfläche 50. Bei den seitlich angeordneten Fördereinrichtungen 8 handelt es sich beispielsweise ebenfalls um Vakuumtransportbänder.

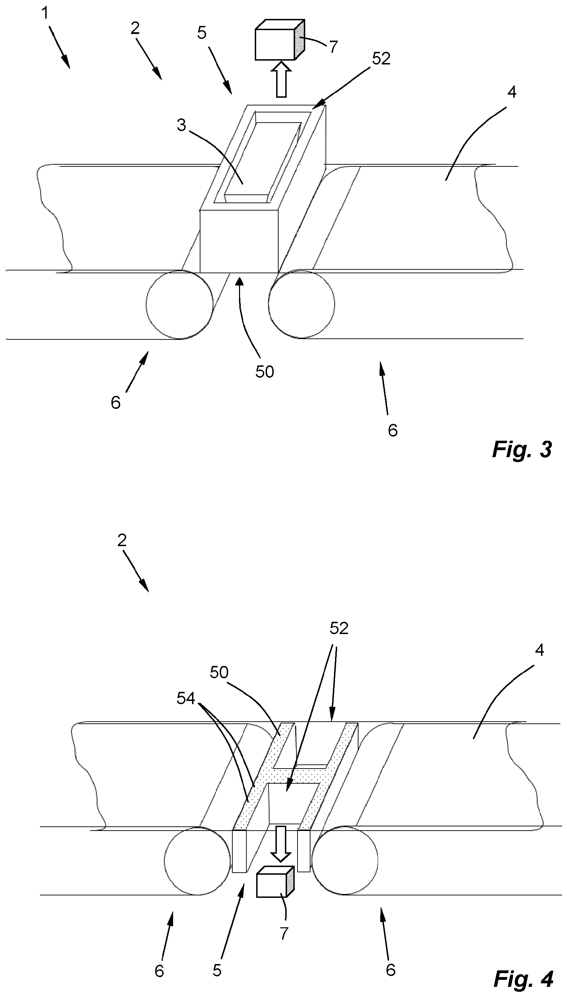

Fig. 3 zeigt ein drittes Ausführungsbeispiel eines Systems 1 ähnlich Fig.1 umfassend eine Kamera 3 und eine Vorrichtung 2. Die Vorrichtung 2 gemäß Fig- 2 ist ähnlich der Vorrichtung 2 gemäß Fig. 1 und für gleiche oder ähnliche Bauteile werden übereinstimmende Bezugszeichen verwendet. Für eine Beschreibung der Bauteile wird auf oben verwiesen.

Im Unterschied zu dem Ausführungsbeispiel gemäß Fig. 1 ist das Gehäuse 5 bei dem Ausführungsbeispiel gemäß Fig. 3 oberhalb der Transportebene der Materialbahn 4 angeordnet, sodass die Bilder von einer Oberseite der Materialbahn 4 aufgenommen werden. Dadurch ist es möglich, einen Abstand zwischen den stromaufwärts und stromabwärts angeordneten Fördereinrichtungen 6 zu verkürzen. In einer alternativen Ausgestaltung überlappen sich dabei ein Förderbereich der Fördereinrichtungen 6 und die Gleitfläche 50.

Fig. 4 zeigt ein viertes Ausführungsbeispiel einer Vorrichtung 2 für eine Inspektion einer entlang ihrer Längsrichtung in einer Transportebene bewegten Materialbahn 4 mit einem Gehäuse 5. Das in Fig. 4 dargestellte Gehäuse 5 weist zwei Aussparungen 52 auf, wobei in jeder Aussparung jeweils eine in Fig. 4 nicht dargestellte Kamera aufnehmbar ist.

Das in Fig. 5 dargestellte Gehäuse 5 weist eine H-förmige Gleitfläche 50 auf, über welche die Materialbahn 4 mittels stromaufwärts und stromabwärts der Gleitfläche 50 angeordneter Fördereinrichtungen 6 geführt wird.

Die dargestellten Gleitfläche 50 weist eine Vielzahl an Öffnungen 54 auf, welche mit einem Unterdruckerzeuger 7 fluidisch verbunden sind, sodass an der Gleitfläche 50 temporär oder dauerhaft ein Unterdruck zum Ansaugen der Materialbahn 4 erzeugbar ist

Die dargestellten Ausführungsbeispiele sind lediglich beispielhaft und es sind zahlreiche Abwandlungen denkbar. Insbesondere sind die im Zusammenhang mit den Ausführungsbeispielen beschriebene Merkmale miteinander austauschbar und/oder kombinierbar.

## Patentansprüche

1. Vorrichtung für eine Inspektion einer entlang ihrer Längsrichtung in einer Transportebene bewegten Materialbahn (4) mittels einer Kamera (3), umfassend ein Gehäuse (5) mit einer parallel zur Transportebene angeordneten Gleitfläche (50), wobei die Materialbahn (4) entlang der Gleitfläche (50) führbar ist, wobei das Gehäuse (5) eine Aussparung (52) aufweist, in welcher die Kamera (3) aufnehmbar ist, und wobei ein Unterdruckerzeuger (7) vorgesehen ist, mittels welchem zumindest an einem Teil der Gleitfläche (50) temporär oder dauerhaft ein Unterdruck zum Ansaugen der Materialbahn erzeugbar ist.

2. Vorrichtung nach Anspruch 1, **dadurch gekennzeichnet, dass** die Gleitfläche (50) eine Vielzahl an Öffnungen (54) aufweist, welche mit dem Unterdruckerzeuger (7) fluidisch verbunden sind.

3. Vorrichtung nach Anspruch 1 oder 2, **dadurch gekennzeichnet, dass** stromaufwärts und stromabwärts der Gleitfläche (50) jeweils eine Fördereinrichtung (6), insbesondere ein Vakuumtransportband, für einen Transport der Materialbahn (4) entlang der Gleitfläche (50) vorgesehen ist.

4. Vorrichtung nach Anspruch 1, 2 oder 3, **dadurch gekennzeichnet, dass** seitlich der Gleitfläche (50) jeweils eine Fördereinrichtung (8) für einen Transport der Materialbahn (4) entlang der Gleitfläche (50) vorgesehen ist.

5. Vorrichtung nach einem der Ansprüche 1 bis 4, **dadurch gekennzeichnet, dass** das Gehäuse (5) unter der Transportebene angeordnet ist.

6. System umfassend eine Kamera und eine Vorrichtung nach einem der Ansprüche 1 bis 5.

7. Verfahren für eine Inspektion einer entlang ihrer Längsrichtung in einer Transportebene bewegten Materialbahn (4), wobei die Materialbahn (4) entlang einer parallel zur Transportebene angeordneten Gleitfläche (50) an einem Gehäuse (5) geführt wird, Bilder der Materialbahn (4) mittels einer Kamera (3), welche in einer festen Position relativ zu der Gleitfläche (50) in einer Aussparung des Gehäuses (5) angeordnet ist, aufgenommen werden, und die Materialbahn (4) zumindest an einen Teil der Gleitfläche (50) mittels Unterdruck temporär oder dauerhaft angesaugt wird.

8. Verfahren nach Anspruch 6, **dadurch gekennzeichnet, dass** die Materialbahn (4) mittels einer stromaufwärts der Gleitfläche (50) und einer stromabwärts der Gleitfläche (50) vorgesehenen Fördereinrichtung (6) entlang der Gleitfläche (50) transportiert wird.

9. Verfahren nach Anspruch 6 oder 7, **dadurch gekennzeichnet, dass** die Materialbahn (4) mittels zwei seitlich der Gleitfläche (50) vorgesehenen Fördereinrichtungen (8) entlang der Gleitfläche (50) transportiert wird.

10. Verfahren nach Anspruch 6, 7 oder 8, **dadurch gekennzeichnet, dass** die Materialbahn (4) über die Gleitfläche (50) geführt wird und Bilder einer Unterseite der Materialbahn (4) aufgenommen werden.

## Claims

1. A device for inspecting, by means of a camera (3), a material sheet (4) moved along its longitudinal direction in a transport plane, comprising a housing (5) with a sliding surface (50) arranged parallel to the transport plane, wherein the material sheet (4) is guidable along the sliding surface (50), wherein the housing (5) has a recess (52) in which the camera (3) is receivable, and wherein a negative pressure generator (7) is provided by means of which a negative pressure for holding the material sheet by suction is temporarily or continuously generatable on at least part of the sliding surface (50).

2. The device according to claim 1, **characterized in that** the sliding surface (50) has a plurality of openings (54) which are fluidically connected to the negative pressure generator (7).

3. The device according to claim 1 or 2, **characterized in that** a conveying device (6), in particular a vacuum transport belt, for transporting the material sheet (4) along the sliding surface (50) is provided both upstream and downstream of the sliding surface (50).

4. The device according to claim 1, 2 or 3, **characterized in that** a conveying device (8) for transporting the material sheet (4) along the sliding surface (50) is provided on each side of the sliding surface (50).

5. The device according to any of claims 1 to 4, **characterized in that** the housing (5) is arranged below the transport plane.

6. A system comprising a camera and a device according to any of claims 1 to 5.

7. A method for inspecting a material sheet (4) moved along its longitudinal direction in a transport plane, wherein the material sheet (4) is passed over a housing (5) along a sliding surface (50) arranged parallel to the transport plane, pictures are taken of the material sheet (4) by means of a camera (3) which is arranged inside a recess of the housing (5) in a fixed position relative to the sliding surface (50), and the material sheet (4) is temporarily or continuously held by suction on at least part of the sliding surface (50) by means of negative pressure.

8. The method according to claim 6, **characterized in that** the material sheet (4) is transported along the sliding surface (50) by means of one conveying device (6) provided upstream of the sliding surface (50) and one provided downstream of the sliding surface (50).

9. The method according to claim 6 or 7, **characterized in that** the material sheet (4) is transported along the sliding surface (50) by means of two conveying devices (8) provided at the sides of the sliding surface (50).

10. The method according to claim 6, 7 or 8, **characterized in that** the material sheet (4) is passed over the sliding surface (50) and pictures are taken of an underside of the material sheet (4).

## Revendications

1. Dispositif destiné à une inspection au moyen d'une caméra (3), d'une bande de matériau (4) déplacée le long de son sens longitudinal dans un plan de transport, comprenant un boîtier (5) avec une surface de glissement (50) disposée parallèlement au plan de transport, sachant que la bande de matériau (4) est guidable le long de la surface de glissement (50), sachant que le boîtier (5) présente un évidement (52) dans lequel la caméra (3) est logeable, et sachant qu'est prévu un générateur de dépression (7) au moyen duquel une dépression est générable temporairement ou durablement au moins sur une partie de la surface de glissement (50), pour aspirer la bande de matériau.

2. Dispositif selon la revendication 1, **caractérisé en ce que** la surface de glissement (50) présente une pluralité d'orifices (54) qui sont reliés fluidiquement au générateur de dépression (7).

3. Dispositif selon la revendication 1 ou 2, **caractérisé en ce qu'**est prévu respectivement en amont et en aval de la surface de glissement (50) un dispositif de convoyage (6), notamment un convoyeur à bande à vide, pour un transport de la bande de matériau (4) le long de la surface de glissement (50).

4. Dispositif selon la revendication 1, 2 ou 3, **caractérisé en ce qu'**est prévu de chaque côté de la surface de glissement (50) un dispositif de convoyage (8), pour un transport de la bande de matériau (4) le long de la surface de glissement (50).

5. Dispositif selon l'une des revendications 1 à 4, **caractérisé en ce que** le boîtier (5) est disposé sous le plan de transport.

6. Système comprenant une caméra et un dispositif selon l'une des revendications 1 à 5.

7. Procédé pour une inspection d'une bande de matériau (4) déplacée le long de son sens longitudinal dans un plan de transport, sachant que la bande de matériau (4) est guidée le long d'une surface de glissement (50) contre un boîtier (5), disposée parallèlement au plan de transport, que des photos de la bande de matériau (4) sont prises au moyen d'une caméra (3) qui est disposée dans une position fixe par rapport à la surface de glissement (50) dans un évidement du boîtier (5), et que la bande de matériau (4) est aspirée, temporairement ou durablement, par dépression au moins sur une partie de la surface de glissement (50).

8. Procédé selon la revendication 6, **caractérisé en ce que** la bande de matériau (4) est transportée le long de la surface de glissement (50), au moyen d'un dispositif de convoyage (6) prévu en amont de la surface de glissement (50) et d'un autre prévu en aval de la surface de glissement (50).

9. Procédé selon la revendication 6 ou 7, **caractérisé en ce que** la bande de matériau (4) est transportée le long de la surface de glissement (50), au moyen de deux dispositifs de convoyage (8) prévus sur les côtés de la surface de glissement (50).

10. Procédé selon la revendication 6, 7 ou 8, **caractérisé en ce que** la bande de matériau (4) est guidée sur la surface de glissement (50) et que des photos d'une face inférieure de la bande de matériau (4) sont prises.
